# EUROPÄISCHE PATENTSCHRIFT

(11) **EP 2 623 374 B1**
(45) Veröffentlichungstag und Bekanntmachung des Hinweises auf die Patenterteilung: **09.07.2014**
(21) Anmeldenummer: 13151456.4
(22) Anmeldetag: 16.01.2013
(51) Int. Cl.: B60R 1/00

(54) **Sichtsystem für Nutzfahrzeuge zur Darstellung von gesetzlich vorgeschriebenen Sichtfeldern eines Hauptspiegels und eines Weitwinkelspiegels**
Vision system for commercial vehicles for the display of the statutory fields of view of a main mirror and a wide-angle mirror
Système de vision pour véhicules utilitaires destiné à la représentation de champs de vision règlementaires d'un rétroviseur principal et d'un rétroviseur grand angle

(30) Priorität: 31.01.2012 DE 102012001835
(43) Veröffentlichungstag der Anmeldung: 07.08.2013
(73) Patentinhaber: MEKRA Lang GmbH & Co. KG, 91465 Ergersheim (DE)
(72) Erfinder: Dr. Lang, Werner, 91465 Ergersheim (DE); Kunz, Manuel, 97285 Röttingen (DE)
(74) Vertreter: Kramer - Barske - Schmidtchen

(56) Entgegenhaltungen:
- EP-A1- 2 484 558
- EP-A2- 1 077 161
- EP-A2- 1 302 365
- WO-A1-2009/132617
- US-A1- 2005 190 260

## Beschreibung

### Gebiet der Erfindung

Die vorliegende Erfindung betrifft ein Sichtsystem für ein Nutzfahrzeug, mit dem gesetzlich vorgeschriebene Sichtfelder eines Hauptspiegels und eines Weitwinkelspiegels (Sichtfeld II bzw. Sichtfeld IV), wie sie für Deutschland beispielsweise in der ECE-Regelung ECE R46 definiert sind, für den Fahrer des Nutzfahrzeugs einsehbar dargestellt werden können.

Bei Kraftfahrzeugen sind abhängig vom Typ des Kraftfahrzeugs, wie beispielsweise Krafträdern, Kraftfahrzeugen zur Personenbeförderung, Kraftfahrzeugen zur Güterbeförderung, usw. so genannte Sichtfelder gesetzlich vorgegeben, welche durch eine Einrichtung für indirekte Sicht, herkömmlicher Weise einen Spiegel, abgebildet werden müssen und durch den auf einem Fahrersitz sitzenden Fahrer jederzeit über die Einrichtung für indirekte Sicht einsehbar sein müssen.

Bei Nutzfahrzeugen, wie beispielsweise Lkws oder Lieferwagen, gehört dazu unter anderem ein Hauptspiegel auf der Fahrer- und der Beifahrerseite, mit welchem der Fahrzeugführer einen ebenen und horizontalen Teil der Fahrbahn von bestimmter Breite einsehen kann, der sich in einer gesetzlich festgelegten Entfernung hinter den Augpunkten des Fahrzeugsführers bis zum Horizont erstreckt. Außerdem muss ein Streifen geringerer Breite mittels dieses Spiegels für den Fahrzeugführer einsehbar sein, welcher in kürzerer Entfernung hinter den Augpunkten des Fahrers beginnt. Der durch den Hauptspiegel eingesehene, gesetzlich als einsehbar vorgeschriebene Bereich in der Nähe des Fahrzeugs wird im Folgenden entsprechend als Sichtfeld des Hauptspiegels bezeichnet.

Neben den Sichtfeldern des Hauptspiegels sind für Nutzfahrzeuge auch Sichtfelder als einsehbar verlangt, die gewöhnlich durch Weitwinkelspiegel abgebildet werden. Mit Weitwinkelspiegeln wird jeweils ein Bereich hinter den Augpunkten des Fahrers in einer bestimmten Erstreckung in Längsrichtung des Fahrzeugs eingesehen, welcher breiter als der durch den Hauptspiegel einsehbare Bereich ist, sich jedoch nur eine bestimmte Länge entlang des Fahrzeugs erstrecken muss. Unter Weitwinkelspiegeln sind dabei solche Spiegel zu verstehen, mit denen ein Bildwinkel erfasst werden kann, der größer ist als derjenige, der dem natürlichen Eindruck des menschlichen Auges entspricht, d. h. größer als 40-50° ist.

Gewöhnlicherweise sind somit je Fahrzeugseite ein Hauptspiegel und ein Weitwinkelspiegel vorgesehen, häufig übereinander angeordnet, in denen die jeweiligen gesetzlich vorgeschriebenen Sichtfelder abgebildet sind. Dies bedeutet jedoch, dass der Fahrer schon um eine Fahrzeugseite einzusehen beide Spiegel gleichzeitig beobachten muss, um einen Einblick in die Sichtfelder und somit um das Fahrzeug zu haben, damit unfallkritische Situationen vermieden werden können. Gleichzeitig ist die Verzerrung aufgrund der unterschiedlichen Bildwinkel der Spiegel im Hauptspiegel und im Weitwinkelspiegel unterschiedlich, was zu Verunsicherungen, wo sich ein im Spiegel abgebildetes Objekt bezüglich des Fahrzeugs befindet, führen kann.

Zum Ersatz von Spiegeln wurden ferner Sichtsysteme für Fahrzeuge, unter anderem Nutzfahrzeuge entwickelt, mit denen Bereiche rund um das Fahrzeug auf übersichtliche und einfache Weise für den Fahrzeugführer beobachtet werden können und die gleichzeitig den Einfluss auf die Umströmung des Fahrzeugs minimieren und somit einen verringerten Haftstoffverbrauch erwarten lassen. Solche Sichtsysteme beinhalten neben mindestens einer Aufnahmeeinheit, die beispielweise durch eine Kamera oder andere Bildsensoren realisiert sein kann, eine Anzeigeeinheit im Fahrerhaus, beispielsweise ein Display. Die von den Aufnahmeeinheiten aufgenommenen Bilder werden auf den Anzeigeeinheiten im Fahrerhaus dargestellt.

In der noch nicht veröffentlichen DE 10 2011 010 624.3 ist ein solches Sichtsystem für ein Nutzfahrzeug beschrieben, mit Hilfe dessen gesetzlich vorgeschriebene Sichtfelder abgebildet werden können. In dem dort beschriebenen System werden mindestens zwei der im Fahrbetrieb zur permanenten Anzeige gesetzlich vorgeschriebenen Sichtfelder dauerhaft und in Echtzeit auf der Anzeigeeinheit im Fahrerhaus angezeigt. Die Sichtfelder werden in einer gemeinsamen Darstellung, beispielsweise nebeneinander, gezeigt. Es ist auch bekannt, die Sichtfelder in überlappender Darstellung auf der Anzeigeeinheit anzuzeigen.

Aus der DE 19900498 B4 ist ferner ein Verfahren und eine Einrichtung zur Einsichtnahme des rückwärtigen Beobachtungsraums bei Kraftfahrzeugen bekannt, bei denen der Beobachtungsraum auf einem Bildschirm abgebildet wird und einen geradlinig nach hinten gerichteten Bereich und einen toten Winkelbereich umfasst, wobei der tote Winkelbereich in einem größeren Winkelbereich erfasst wird als der geradlinig nach hinten gerichtete Bereich. Die beiden Winkelbereiche werden durch voneinander unabhängige Kameraelemente erfasst. Ferner werden die beiden Bereiche in einem umgekehrt proportionalen Breitenverhältnis auf einem gesplitteten oder zweisegmentigen Bildschirm nebeneinander angezeigt.

Aus der nachveröffentlichten EP 2 484 558 A1 ist eine Anzeigeeinrichtung für Sichtfelder eines Nutzfahrzeugs bekannt. Die Anzeigeeinrichtung ist dazu angepasst, mindestens zwei der gesetzlich vorgeschriebenen Sichtfelder dauerhaft und in Echtzeit auf der Anzeigeeinheit im Fahrerhaus anzuzeigen, wobei die zwei Sichtfelder in einer gemeinsamen Darstellung überlappend gezeigt werden.

Aus der US 2005/0190260 A1 ist ein Weitwinkeldisplaysystem für Kraftfahrzeuge bekannt, bei dem durch die Verwendung von mehreren Kameras verschiedene Bilder aufgezeichnet werden und so verarbeitet werden, dass ein gemeinsames, zusammengesetztes Bild erzeugt wird, wie wenn es direkt vom menschlichen Auge betrachtet würde, insbesondere durch eine einzige Weitwinkelkamera, ohne dass die Verzerrung, die mit Weitwinkelkameras einhergeht, auftritt.

Aus der WO 2009/132617 A1 ist eine Vorrichtung und ein Verfahren zum Erfassen und Anzeigen des rückwärtigen und/oder seitlichen Umfelds eines Kraftfahrzeugs bekannt. In Abhängigkeit von der Fahrsituation werden Bilder oder Bildausschnitte einer oder mehrerer Einrichtungen zum Aufnehmen von Bildern ausgewählt und in einem Gesamtbild zusammengesetzt, wobei ein nahtloser Übergang zwischen den Bildern vorhanden ist.

Aus der gattungsgemäßen EP 1077 161 A2 ist ein multifunktionales Fahrzeugkamerasystem bekannt, sowie ein Bilddisplayverfahren dafür. Es werden Bilder von beispielsweise einer rechten Türspiegelkamera und einer rechten Säulenkamera analysiert und derart nach Erfassung von gemeinsamen Bildelementen in diesen Abschnitten zusammengesetzt, sodass ein Panoramabild erzeugt wird. Um das Panoramabild zu erzeugen, wird die Richtung und der Winkel jeder Kamera so eingestellt, dass die Kameras in einem teilweise überlappenden Verhältnis in ihren Blickfeldern sind, was von einem Kamerasteuersystem gesteuert wird.

### Darstellung der Erfindung

Davon ausgehend ist es Aufgabe der Erfindung, ein Sichtsystem für ein Nutzfahrzeug zur Darstellung von gesetzlich vorgeschriebenen Sichtfeldern eines Hauptspiegels und eines Weitwinkelspiegels (Sichtfeldern II und IV) der selben Fahrzeugseite in einem Fahrerhaus des Nutzfahrzeugs bereitzustellen, mit dem der Fahrer auf einfache Weise den räumlichen Bezug von etwaigen Hindernissen in Verhältnis zu seinem Fahrzeug erkennen kann und mit welchem gleichzeitig dauerhaft, das heißt z. B. ohne Unterbrechung bei eingeschalteter Zündung, und zuverlässig in Echtzeit die Sichtfelder eines Hauptspiegels und eines Weitwinkelspiegels der selben Fahrzeugseite angezeigt werden. Das System soll ferner so ausgelegt sein, dass es ergonomisch günstig ist, das heißt bei dem sich der Fahrer möglichst ohne lange Anpassungszeit problemlos in dem eingesehenen Bereich um das Fahrzeug orientieren kann.

Diese Aufgabe wird mit einem Sichtsystem für ein Nutzfahrzeug mit den Merkmalen des Anspruchs 1 gelöst. Bevorzugte Ausführungsformen sind in den abhängigen Ansprüchen angegeben.

Der Erfindung liegt der Gedanke zu Grunde, die Darstellungen, die gewöhnlicher Weise auf dem Hauptspiegel und dem Weitwinkelspiegel einer Fahrzeugseite zu sehen sind, in ein gemeinsames Bild zu kombinieren, das durchgängig und aus mindestens zwei einzelnen Bildern überlappend oder unmittelbar aneinander angrenzend zusammengesetzt ist, so dass der Fahrer nicht zwei Darstellungen gleichzeitig sondern lediglich eine Darstellung betrachten muss und dennoch einen vollständigen Überblick über die Umgebung einer Fahrzeugseite hat. Außerdem soll das Bild für den Fahrer in möglichst ergonomischer Weise gestaltet sein, was bedeutet, dass das Bild möglichst realitätsnah ist. Um gleichzeitig das Weitwinkelspiegelsichtfeld und das Hauptspiegelsichtfeld abdecken zu können, ist es daher die der Erfindung zu Grunde liegende Idee, Bilder, die unterschiedliche Bildwinkel bzw. Verzerrungen haben, welche jeweils eines der Sichtfelder beinhalten, nebeneinander in gleicher Perspektive, das heißt aus gleicher virtueller Blickrichtung, zusammenzusetzen, wobei zumindest ein Modifikationsbereich des Bildes mit dem größeren Bildwinkel, der nicht dem des natürlichen Eindrucks des menschlichen Auges entspricht, derart modifiziert wird, dass einerseits kein abrupter Übergang sondern ein verlaufender, verschwimmender Übergang im Hinblick auf die durch die verschiedenen Blickwinkel hervorgerufene Verzerrung zwischen den Bildern vorhanden ist, d. h. dass zwischen den Bildern kein abrupter Sprung, was die unterschiedlichen Verzerrungen angeht, erscheint, und gleichzeitig die Erstreckung des Bilds mit größerer Aufspreizung, d. h. Verzerrung für die Darstellung verkleinert wird, ohne wesentliche Informationen oder Ergonomie bzgl. der Orientierung auf dem zusammengesetzten Bild zu verlieren. Dies führt dazu, dass das gemeinsame Bild verhältnismäßig realitätsnah wahrgenommen wird, auch wenn die im Weitwinkelspiegel bzw. durch Weitwinkelobjektive übliche Verzerrung im Weitwinkelbereich des Bildes nach wie vor vorhanden ist und somit ein großer Bildbereich dargestellt werden kann.

Zur einfachen, verwirrungsfreien Orientierung auf dem Bild trägt auch bei, wenn das erste und das zweite Bild so zusammengesetzt sind, dass sie bezüglich ihrer Erstreckung in Längsrichtung fluchten. Dadurch entsteht der Eindruck eines einzigen Bilds, das je nach Bildbereich unterschiedliche Auflösungen hat, sich aber sonst bei einem Weitwinkelbild mit Bildmitte im unverzerrten Teil des gemeinsamen Bilds, d. h. aus dem ersten Bild stammend, nicht wesentlich unterscheidet, aber im Vergleich zu diesem unbearbeiteten (aufgenommenen) Bild in der Bildbreitenrichtung, die der Weitwinkelrichtung entspricht und im Wesentlichen senkrecht zur Fahrzeuglängsachse ist, komprimiert ist.

Somit kann durch die erfindungsgemäße Darstellung sowohl der große Sichtbereich des Weitwinkelspiegels darstellt werden als auch, wie es Fahrer gewohnt sind, der Hauptspiegelsichtbereich ohne wesentliche Verzerrung darstellt werden.

Unter "Weitwinkel" wird gewöhnlicher Weise ein Bildwinkel verstanden, der größer ist als es derjenige ist, der dem natürlichen Eindruck des menschlichen Auges entspricht, was üblicher Weise Bildwinkel über 40-50° sind. Ferner wird unter gemeinsamer Perspektive verstanden, dass die Blickrichtungen zwischen dem ersten Bild und dem zweiten Bild im Wesentlichen identisch sind, also das erste Bild und das zweite Bild nicht beispielsweise zueinander verdreht oder über Kopf angeordnet werden. Als "Weitwinkelrichtung" wird im Folgenden eine horizontale und in der Regel bodenparallele Richtung verstanden, entlang derer ein Weitwinkelobjektiv bzw. -spiegel in einem Weitwinkelmodus abbildet.

Unter optischer Verzerrung bzw. Verzeichnung ist ein geometrischer Abbildungsfehler optischer Systeme zu verstehen, der zu einer lokalen Veränderung des Abbildungsmaßstabs führt. Die Maßstabsänderung beruht auf einer Änderung der Vergrößerung mit zunehmendem Abstand des Bildspunkts von der optischen Achse. Beispielsweise gibt es hier bei Verwendung von Weitwinkeleinrichtungen zur Aufnahme von Bildern eine so genannte tonnenförmige Verzeichnung oder Verzerrung, bei der die Vergrößerung zu den Rändern des Bildfelds hin abnimmt. Bei der tonnenförmigen Verzerrung ist es entsprechend so, dass die Verzerrung in der Bildmitte verhältnismäßig gering und kaum wahrnehmbar ist, d. h. dass die Verzerrung dort im Wesentlichen der Wahrnehmung entspricht, die durch den natürlichen Eindruck des menschlichen Auges entsteht.

Dabei ist es zur Erzeugung des ersten Bilds und des zweiten Bilds denkbar, dass das zweite Bild in allen Bildrichtungen als Weitwinkelbild erzeugt wird oder aber zumindest eine Weitwinkelrichtung hat. Die Weitwinkelrichtung ist dabei zumindest die horizontale Richtung, die im Wesentlichen senkrecht zur Längsachse des Nutzfahrzeugs ist.

Das erste Bild und das zweite Bild können durch die Erfassungseinheit auf zwei verschiedene, vorteilhafte Arten erfasst werden.

So ist es nach einer bevorzugten Ausführungsform möglich, dass die Erfassungseinheit eine gemeinsame Aufnahmeeinheit, wie beispielsweise einen Bildsensor oder eine Kamera beinhaltet, welche mittels einer Weitwinkeleinrichtung ein Bild aufnimmt, das sowohl das Sichtfeld des Hauptspiegels als auch das Sichtfeld des Weitwinkelspiegels beinhaltet. In diesem Fall liegt das Sichtfeld des Hauptspiegels vorzugsweise im mittleren Bereich des aufgenommenen Bildes, so dass es im Wesentlichen unverzerrt ist. In einer bevorzugten Ausführungsform kann in diesem Fall der Bildwinkel nahezu ein 180° Bildwinkel sein, d. h. dass beispielsweise Fischaugenobjektive oder Ähnliches zum Erzeugen des Bilds verwendet werden können. In dieser bevorzugten Ausführungsform ist ferner eine Umwandlungseinheit vorgesehen, die beispielsweise in die Berechnungseinheit oder aber in die Erfassungseinheit integriert sein kann, und welche das durch die Aufnahmeeinheit aufgenommene gemeinsame Bild in das erste und das zweite Bild separiert.

Nach einer alternativen bevorzugten Ausführungsform ist für jedes Bild, d. h. das erste Bild und das zweite Bild, eine getrennte Aufnahmeeinheit vorgesehen, so dass zumindest eine erste Aufnahmeeinheit und eine zweite Aufnahmeeinheit vorhanden sind. In diesem Fall kann die erste Aufnahmeeinheit für das erste Bild einen Bildwinkel haben, der dem des natürlichen Eindrucks des menschlichen Auges entspricht, während die zweite Aufnahmeeinheit eine Weitwinkeleinrichtung sein kann. Für die Aufnahmeeinheiten können wiederum beispielsweise Kameras oder Bildsensoren verwendet werden.

Nach einer vorteilhaften Ausführungsform hat das erste Bild einen virtuellen Sichtkegel von 40-50°, was derjenige ist, der dem des menschlichen Auges entspricht. Je nach Erzeugung des ersten Bilds kann dies dadurch geschehen, dass ein zentraler Bereich, der diesem virtuellen Sichtkegel entspricht, aus einem Weitwinkelbild herausgeschnitten wird, oder dass ein Objektiv mit einem entsprechenden 40-50° Bildwinkel zur Erzeugung speziell des ersten Bilds verwendet wird. Dies bedeutet, dass das erste Bild im Wesentlichen einen unverzerrten Eindruck auf den Fahrer macht.

Das Erzeugen des ersten und des zweiten Bilds kann durch geeignete Aufnahmeeinheiten geschehen, wie beispielsweise Kameras oder Bildsensoren. Es ist denkbar, eine einzige Aufnahmeeinheit mit einer oder mehreren Teileinheiten, wie einzelnen Bildsensoren, oder eine oder mehrere voneinander unabhängige Aufnahmeeinheiten, die getrennt voneinander am Fahrzeug angeordnet sind, vorzusehen. Zumindest eine der Aufnahmeeinheiten bzw. Teileinheiten ist für das Erzeugen eines Bilds mit Weitwinkel angepasst, das nach Bedarf das erste und das zweite Bild oder nur das zweite Bild beinhalten kann.

Wenn vorzugsweise das zweite Bild nur in einer Richtung bearbeitet wird, wenn es mit dem ersten Bild zusammengesetzt wird, vorzugsweise in der Richtung, die senkrecht zur Nutzfahrzeugmittelebene ist, ist der natürliche Eindruck nach dem Zusammensetzten der Bilder besonders günstig, so dass keine langen Adaptionszeiten zur Gewöhnung an das Bild und zur Orientierung bezüglich der Fahrzeugposition in Bezug zu einem möglichen Hinderniss, das auf dem Bild gezeigt ist, für den Fahrer erforderlich sind. D. h. der Fahrer nimmt die Modifikation beim Betrachten quasi nicht wahr. Dazu trägt insbesondere auch das Fluchten der Bilder entlang der Nutzfahrzeuglängsachsenrichtung bei.

Nach einer bevorzugten Ausführungsform beinhaltet zumindest entweder das separate Weitwinkelbild, das heißt das zweite Bild, oder das gemeinsam aufgenommene erste und zweite Bild einen Seitenbereich des Nutzfahrzeugs. Anschließend kann durch die Berechnungseinheit bzw. die Umwandlungseinheit das erste und/oder das zweite Bild derart modifiziert bzw. angepasst werden, dass der aufgenommene Nutzfahrzeugseitenbereich im gemeinsamen Bild, das mittels der Anzeigeeinheit im Fahrerhaus dargestellt wird, gezeigt wird. Denkbar ist, den Seitenbereich mit dem ersten Bild abzubilden bzw. aus dem gemeinsam aufgenommenen Bild das erste Bild so herauszuschneiden, dass der Nutzfahrzeugseitenbereich im ersten Bild enthalten ist, und die Bilder dann so zum gemeinsamen Bild zusammenzusetzen, dass das zweite Bild an der dem Nutzfahrzeugseitenbereich abgewandten Seite des ersten Bilds an das erste Bild anschließt. In diesem Fall ist der Übergangsbereich zwischen dem ersten und dem zweiten Bild mittels der Berechnungseinheit zu modifizieren.

Möglich ist auch, vor allem bei getrennter Aufnahme des ersten und zweiten Bilds, dass der Nutzfahrzeugseitenbereich im zweiten Bild enthalten ist und die Bilder anschließend so zusammengesetzt werden, dass der Nutzfahrzeugseitenbereich gezeigt ist, anschließend der im Wesentlichen unverzerrte Bereich des ersten Bilds mit dem Hauptspiegelsichtfeld und daran anschließend in dieser Reihenfolge der verzerrte Bereich des zweiten Bilds mit dem Weitwinkelspiegelsichtfeld, wobei eine Modifikation durch die Berechnungseinheit vorzugsweise in diesem Fall nur zwischen dem verzerrten Bereich des zweiten Bilds und dem ersten Bild erforderlich ist, während der Fahrzeugseitenbereich, da er sich bei günstiger Position im Weitwinkelbild im Wesentlichen unverzerrt darstellen lässt, lediglich überlagert wird. Denkbar ist jedoch auch, in diesem Fall zwei Übergangsbereiche vorzusehen, so dass das erste Bild im Wesentlichen in einen mittleren Bereich des zweiten Bilds eingebettet wird und in jedem Übergangsbereich in der Weitwinkelrichtung eine Modifikation des zweiten Bilds erfolgt.

Das erste Bild und das zweite Bild werden bezüglich der Fahrzeuglängsrichtung, also bezüglich der Sicht in der Richtung, die sich in eine Richtung im Wesentlichen parallel zur Fahrzeuglängsachse erstreckt, fluchtend zusammengesetzt, so dass Horizont und gemeinsamer Beginn neben dem Fahrerhaus vorliegen. Dies führt zu gewöhnlichen, rechteckigen gemeinsamen Bildern, auf denen sich der Fahrer leicht zurechtfinden kann. Gerade wenn das erste und das zweite Bild durch eine gemeinsame Aufnahmeeinheit aufgenommen werden, ist dies leicht zu realisieren, da die Bilder in der gewünschten Weise ohnehin fluchten.

Die Modifikation im Modifikationsbereich, die vorzugsweise ausschließlich im zweiten Bild vorgenommen wird, kann beispielsweise dadurch geschehen, dass im zweiten Bild jede n-te Pixelreihe, wenn man in der Weitwinkelrichtung läuft, weggelassen wird. n ist dabei ≥ 2. Eine andere bevorzugte Möglichkeit für die Modifikation ist das Stehenlassen jeder k-ten Pixelreihe, wobei k ≥ 2. So können beispielsweise jeweils zwei aufeinander folgende Pixelreihen gelöscht und jede dritte Pixelreihe stehengelassen werden.

Nach einer besonders einfachen Modifikationsweise ist n bzw. k dabei über die gesamte darzustellende Bildbreite (in der Weitwinkelrichtung) des Bilds konstant.

Die Weitwinkelrichtung ist dabei eine Öffnungswinkelrichtung, die auf dem zweiten Bild dargestellt wird und auf dem zweiten Bild im Wesentlichen in einer Bildbreitenrichtung erscheint.

Möglich ist auch, nur in einem Bereich, nämlich dem Modifikationsbereich des zweiten Bilds die Modifikation durch die Berechnungseinheit vorzunehmen. Der Modifikationsbereich ist dabei vorzugsweise der dem ersten Bild in Weitwinkelrichtung abgewandte Teil des zweiten Bildes. Alternativ kann über die gesamte darzustellende Breite des zweiten Bilds die Modifikation geschehen.

Alternativ dazu ist es möglich, dass n bzw. k über den zu modifizierenden Bereich des zweiten Bilds, der den Modifikationsbereich bildet, variabel ist. In diesem Fall wird vorzugsweise nahe beim Fahrzeug ein größeres n verwendet, das mit abnehmender Entfernung vom Fahrzeug kleiner wird. Oder es wird mit zunehmender Entfernung vom Fahrzeug ein größeres k verwendet, d.h. in beiden Fällen ist die Ausdünnung entfernt vom Fahrzeug stärker. Dabei kann die Abnahme von n bzw. Zunahme von k kontinuierlich oder aber stufenweise erfolgen.

Das Weglassen von Pixelreihen ist eine einfache und kostengünstige Möglichkeit, sowie eine Möglichkeit, die verhältnismäßig wenig Berechnungsaufwand erfordert, im Übergangsbereich und verzerrten Weitwinkelbereich das zweite Bild zu komprimieren und dennoch eine Anpassung an den Bildwinkel und damit die Verzerrung des ersten Bilds beizubehalten.

Durch die Verwendung von zwei unterschiedlichen Bildsensoren für das erste Bild und das zweite Bild bzw. zwei unterschiedlichen Kameras oder Aufnahmeteileinheiten ist es möglich, das erste Bild mit einer ersten Auflösung oder Winkelauflösung und das zweite Bild mit einer zweiten Auflösung bzw. Winkelauflösung zu erzeugen, wobei die (Winkel-)Auflösung des ersten Bilds vorzugsweise größer als die (Winkel-)Auflösung des zweiten Bilds ist. Dies entspricht ebenfalls dem, was der Fahrer von gewöhnlichen Haupt- und Weitwinkelspiegeln gewohnt ist, nämlich eine schärfere Darstellung im Hauptspiegel als im Weitwinkelspiegel. Außerdem kann dann im fahrzeugnahen Bereich mit großer Genauigkeit abgebildet werden. Auch die Modifikation des zweiten Bilds führt zu einer Art Verringerung der Auflösung im bearbeiteten Bereich.

Nach einer bevorzugten Ausführungsform ist die Weitwinkelrichtung im Wesentlichen senkrecht zur Nutzfahrzeuglängsachse und horizontal. Dies entspricht den Richtungen, die gewöhnlicher Weise jetzt durch einen Weitwinkelspiegel dargestellt werden.

Bezüglich der Anzeigeeinheit im Fahrerhaus ist es aus ergonomischen Gesichtspunkten vorteilhaft, die Anzeigeeinheit an der A-Säule anzuordnen. Dies entspricht im Wesentlichen der Position, wo der Fahrer eines Nutzfahrzeugs ein indirektes Sichtsystem für die vorgeschriebenen Sichtfelder II und IV erwartet. Diese Anzeigeeinheit kann vorzugsweise durch ein Display oder aber durch eine Projektion direkt auf beispielsweise die A-Säule oder ein anderes Fahrzeugstrukturbauteil erfolgen.

Selbstverständlich ist es möglich, sowohl für den Fahrerseitenbereich als auch für den Beifahrerseitenbereich oder aber nur für eine der beiden Seiten ein Sichtsystem vorzusehen. Wird auf beiden Seiten ein Sichtsystem eingesetzt, kann dies in ein System kombiniert sein, so dass z. B. die Berechnungseinheit für beide Seiten genutzt wird, oder es können zwei vollständig voneinander unabhängige Systeme eingesetzt werden.

### Kurze Beschreibung der Figuren

Nachfolgend wird die Erfindung beispielhaft anhand der beigefügten Figuren beschrieben, in denen:
- Fig. 1: ein erfindungsgemäßes Sichtsystem zeigt;
- Fig. 2: die gesetzlich vorgeschriebenen Sichtfelder eines Hauptspiegels und eines Weitwinkelspiegels auf beiden Seiten eines Nutzfahrzeugs in einer schematischen Draufsicht zeigt;
- Fig. 3: die durch die Aufnahmeeinheiten aufgenommenen virtuellen Sichtkegel auf einer Seite eines Nutzfahrzeugs in einer schematischen Draufsicht veranschaulicht;
- Fig. 4: eine Fig. 3 entsprechende Ansicht mit einer gemeinsamen Aufnahmeeinheit für das erste und das zweite Bild ist; und
- Fig. 5: die erfindungsgemäße Anzeige auf der Anzeigeeinheit erläutert.

### Beschreibung bevorzugter Ausführungsformen

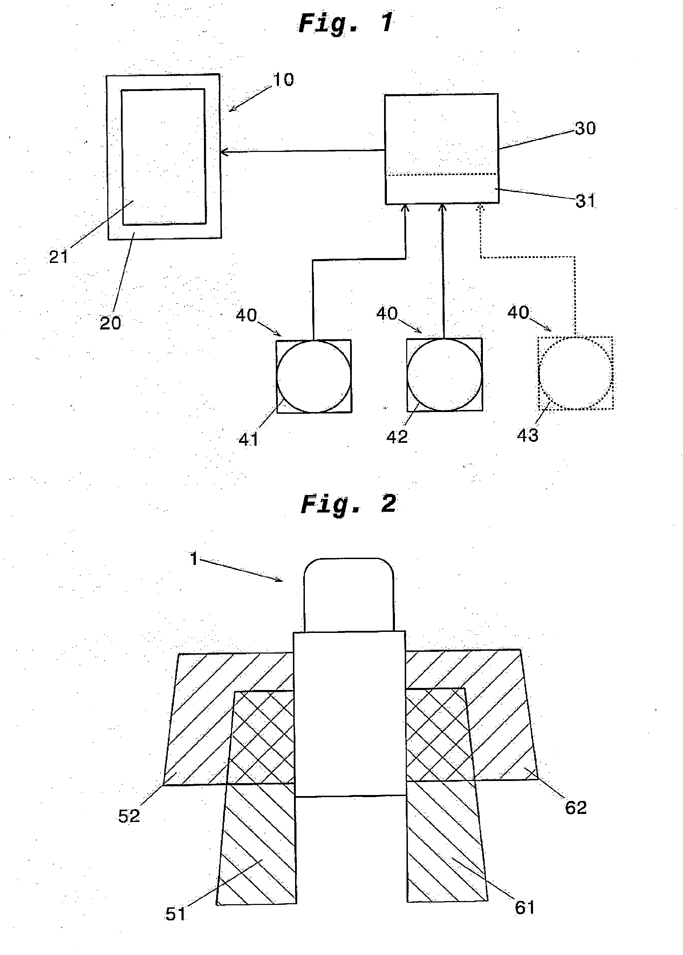

Fig. 1 zeigt ein erfindungsgemäßes Sichtsystem 10 für ein Nutzfahrzeug in schematischer Darstellung. Das Sichtsystem 10 enthält eine Anzeigeeinheit 20 für die Darstellung von gesetzlich vorgeschriebenen Sichtfeldern eines Hauptspiegels und eines Weitwinkelspiegels derselben Fahrzeugseite in einem Fahrerhaus des Nutzfahrzeugs. In der schematischen Darstellung von Fig. 1 ist die Position der Anzeigeeinheit 20 im Fahrerhaus des Nutzfahrzeugs nicht gezeigt.

Die Anzeigeeinheit 20 erhält Daten von einer Berechnungseinheit 30, welche wiederum mit Eingangsdaten von einer Erfassungseinheit 40 versorgt wird. Die Erfassungseinheit 40, die in einer Ausführungsform aus zwei Aufnahmeeinheiten 41, 42, wie z. B. Kameras besteht, ist derart gestaltet, dass ein erstes Bild und ein zweites Bild, die unterschiedliche Bildwinkel haben, von den Aufnahmeeinheiten 41, 42 erzeugt werden. In der dargestellten Ausführungsform nimmt die erste Kamera bzw. Aufnahmeeinheit 41 ein erstes Bild auf, das das Sichtfeld des Hauptspiegels beinhaltet und vorzugsweise mit großer Auflösung und im wesentlichen unverzerrt aufgenommen wird, das heißt mit einem Bildwinkel, der dem Bildwinkel der natürlichen Wahrnehmung des Menschen entspricht, während die Kamera bzw. Aufnahmeinheit 42 ein zweites Bild erzeugt, das zumindest eine Weitwinkelrichtung mit einem Bildwinkel größer als dem des natürlichen Eindrucks des Auges aufweist und das Sichtfeld eines Weitwinkelspiegels (Sichtfeld IV) abbildet. Statt der Kameras ist es auch denkbar, dass die Aufnahmeeinheiten 41, 42 durch verschiedene Bildsensoren oder Ähnliches gebildet werden.

Wird das erfindungsgemäße Sichtsystem auf beiden Seiten des Fahrzeugs angewendet, so sind (nicht dargestellt in Fig. 1) entsprechende zusätzliche Kameras oder andere Aufnahmeeinheiten sowie ggf. eine weitere Anzeigeeinheit für die zweite Seite des Nutzfahrzeugs vorgesehen. Die Berechnungseinheit 30 kann nach Bedarf gemeinsam für beide Seiten des Fahrzeugs verwendet werden oder aber es wird auch eine separate Berechnungseinheit für jede Seite des Fahrzeugs vorgesehen.

In Fig. 1 ist ferner eine alternative Ausführungsform des erfindungsgemäßen Sichtsystems 10 durch gestrichelte Linien angedeutet. Statt der Aufnahmeeinheiten 41, 42, die die Erfassungseinheit 40 bilden, wird in diesem Fall die Erfassungseinheit 40 durch eine einzige, gemeinsame Aufnahmeeinheit 43 gebildet. Diese kann wiederum durch eine Kamera, einen Bildsensor oder Ähnliches ausgebildet sein. Die Aufnahmeeinheit 43 erfasst in diesem Fall ein Bild, das das Sichtfeld des Hauptspiegels und das Sichtfeld des Weitwinkelspiegels beinhaltet und somit vorzugsweise mit einer Weitwinkeleinrichtung aufgenommen ist, die einen großen Bildwinkel hat. Der Bildwinkel kann beispielsweise bis zu 180° sein, d. h. es kann beispielsweise ein Fischaugenobjektiv verwendet werden. Das gemeinsam durch die Aufnahmeeinheit 43 aufgenommene Bild wird dann einer Umwandlungseinheit 31 zugeführt, die in der in Fig. 1 dargestellten Ausführungsform in der Berechnungseinheit 30 integriert ist. Alternativ könnte die Umwandlungseinheit 31 auch der Aufnahmeeinheit 43 beispielsweise zugeordnet sein, im Display, d.h. der Anzeigeeinheit 20, integriert sein, oder als getrennte Einrichtung, die zwischen Aufnahmeeinheit 43 und Berechnungseinheit 30 geschaltet ist, vorgesehen sein.

Die Umwandlungseinheit 31 trennt durch Bildbearbeitung das gemeinsam aufgenommene Bild in das erste Bild und das zweite Bild, wobei das erste Bild vorzugsweise aus der Bildmitte des gemeinsam durch die Aufnahmeeinheit 43 aufgenommenen Bilds herausgeschnitten wird, da dieser Bereich im Wesentlichen unverzerrt ist und das gemeinsam aufgenommene Bild derart gerichtet ist, dass in dem in der Mitte des Bilds liegenden Bereich das Sichtfeld des Hauptspiegels abgebildet ist. Das zweite Bild wird dann beispielsweise unmittelbar angrenzend an das erste Bild aus dem gemeinsamen Bild herausgeschnitten und zwar derart, dass es den Bereich auf der dem Nutzfahrzeug abgewandten Seite angrenzend an das erste Bild abdeckt und eine gleiche Erstreckung in der Bildhöhenrichtung, d. h. der vertikalen Richtung entsprechend, hat. Die Bearbeitungseinheit 30 bearbeitet in dieser Ausführungsform in entsprechender Weise das erste und zweite Bild und führt das bearbeitete Bild als gemeinsames Bild der Anzeigeeinheit 20 zur Anzeige zu. Dabei kann das gesamte aufgenommene Bild in das erste Bild und das zweite Bild zerlegt werden, oder aber es kann derart sein, dass die Gesamtabdeckung des gemeinsam aufgenommenen Bildes größer als die des kombinierten ersten und zweiten Bildes ist, so dass ein Teil des gemeinsam aufgenommenen Bildes nicht verwendet wird.

Fig. 2 zeigt einen Teil der darzustellenden Sichtfelder um ein Nutzfahrzeug 1. Dies ist beispielsweise ein Sichtfeld 51 (Sichtfeld II) eines Hauptspiegels der linken Seite, ein Sichtfeld 52 (Sichtfeld IV) eines Weitwinkelspiegels der linken Seite, ein Sichtfeld 61 eines Hauptspiegels der rechten Seite und ein Sichtfeld 62 eines Hauptspiegels der rechten Seite. Natürlich kann das Sichtsystem für ein Nutzfahrzeug 1 auch nur auf einer Nutzfahrzeugseite eingesetzt werden, also beispielsweise das Sichtsystem 10 nur auf der schwerer einsehbaren Nutzfahrzeugseite, das heißt bei einer Fahrerposition auf der linken Seite, der rechten Seite des Nutzfahrzeugs, eingesetzt werden, indem nur die Sichtfelder 61, 62 der rechten Seite mittels eines Sichtsystems 10 auf einer Anzeigeeinheit 20 abgebildet werden, während beispielweise für die Fahrerseite, hier bei einer Fahrerposition auf der linken Nutzfahrzeugseite, gewöhnliche Mittel für indirekte Sicht, wie Spiegel, verwendet werden.

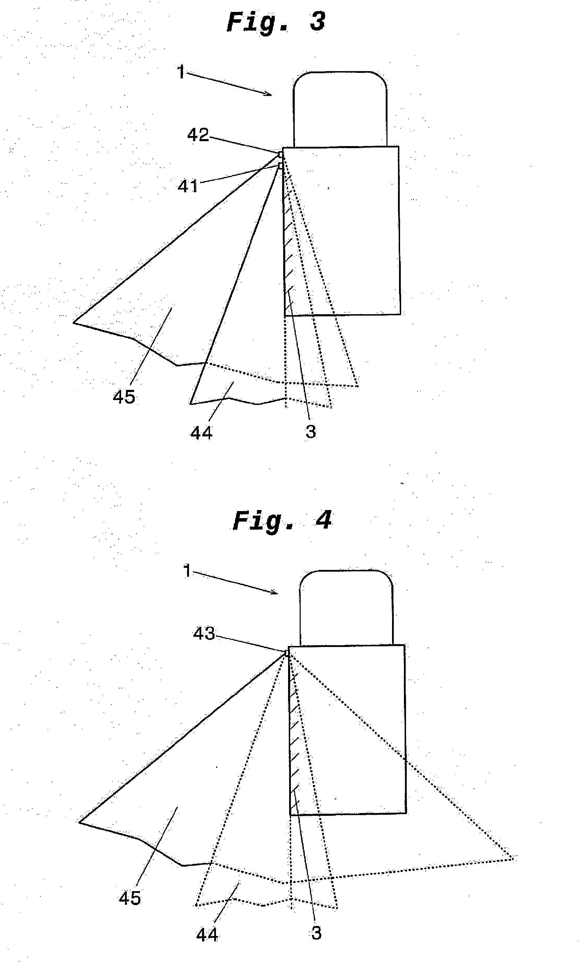

Fig. 3 und 4 zeigen schematisch die von den Aufnahmeeinheiten 41, 42, 43 aufgenommenen Bildwinkel.

In der Ausführungsform, in der für das erste bzw. zweite Bild getrennte Aufnahmeeinheiten 41, 42 vorgesehen sind (Fig. 3), ist die Kamera (Aufnahmeeinheit) 42 angepasst, ein zweites Bild zu erzeugen, das einen Bildwinkel aufweist, der größer ist als derjenige, der durch die Kamera (Aufnahmeeinheit) 41 aufgenommen wird. Dies ist schematisch in Fig. 3 durch die Sichtkegel 45 der zweiten Kamera 42 bzw. den Sichtkegel 44 der ersten Kamera 41 angedeutet. Wie in Fig. 3 erkennbar ist, können die Kameras 41, 42 vorzugsweise so angeordnet sein, dass sie einen Fahrzeugseitenbereich 3 miterfassen. Dabei ist es ausreichend, wenn eine der beiden Kameras 41, 42 entsprechend angeordnet ist. Dies ermöglicht es, einen Nutzfahrzeugseitenbereich 3 (in Fig. 3 ist das System beispielhaft für die linke Nutzfahrzeugseite dargestellt) aufzunehmen und in dem auf der Anzeigeeinheit 20 dargestellten, gemeinsamen Bild anzuzeigen. Der Nutzfahrzeugseitenbereich 3 ist in der Draufsicht aus Fig. 3 schematisch gezeigt.

Fig. 4 zeigt alternativ die Ausführungsform, bei der eine einzige Aufnahmeeinheit 43, wie z. B. eine Kamera, einen Sichtkegel 46 erfasst, der sowohl den (virtuellen) Sichtkegel 44 als auch den (virtuellen) Sichtkegel 45 beinhaltet. Der Sichtkegel 46 ist somit ein mit einem starken Weitwinkel aufgenommener Sichtkegel, bei dem, wie es in Fig. 4 schematisch angedeutet ist, der (virtuelle) Sichtkegel 44, der den Hauptspiegelsichtbereich abdecken soll, im Wesentlichen in der Bildmitte (Sichtkegelmitte) liegt. Der Nutzfahrzeugseitenbereich 3 wird ebenfalls mit abgebildet.

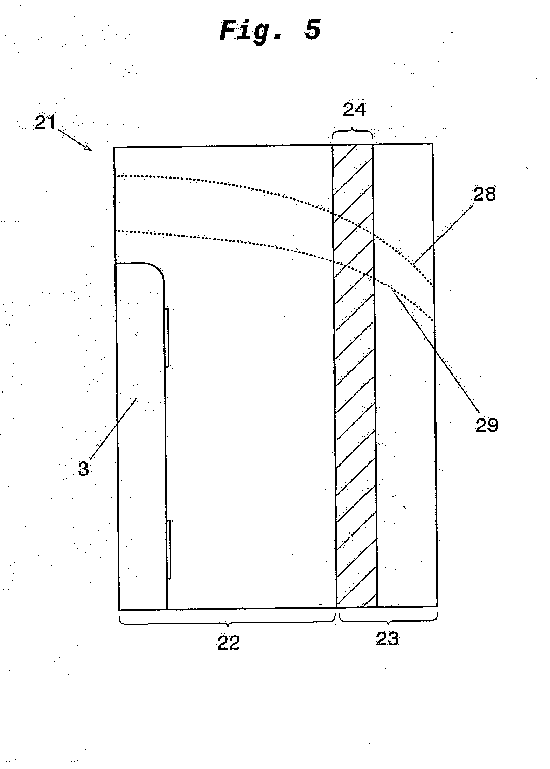

Fig. 5 zeigt beispielhaft und schematisch ein gemeinsames Bild 21, das auf der Anzeigeeinheit 20 dargestellt wird.

Das auf der Anzeigeeinheit 20 gezeigte gemeinsame Bild 21 beinhaltet einen ersten Bildbereich 22, der mittels des ersten Bilds von der ersten Kamera 41 und deren Sichtkegel 44 erzeugt wird bzw. aus dem gemeinsam durch die Aufnahmeeinheit 43 aufgenommenen Bild entsprechend dem Sichtkegel 44 herausgeschnitten ist, und zwar vorzugsweise aus dem weitgehend unverzerrten Teil des gemeinsam aufgenommenen Bilds, der sich in dessen Bildmitte befindet. Ferner beinhaltet es einen zweiten Bildbereich 23, der auf Basis des von z. B. der Kamera 42 erzeugten Bilds oder aus dem stärker bzw. deutlich verzerrten Teil des gemeinsam aufgenommenen Bilds entsprechend dem Sichtkegel 45 generiert ist, und zwar so, dass dessen dem Fahrzeug abgewandter Bereich mit einem Bildwinkel bzw. zumindest einer Verzerrung, die größer ist als die Verzerrung des ersten Bilds, verwendet wird. Dies bedeutet, dass der Bildbereich 23 grundsätzlich verzerrter ist als der Bildbereich 22, was durch virtuelle abgebildete, in Realität gerade Linien 28, 29 in Fig. 5 angedeutet ist, die erkennbar im Bildbereich 23 verzerrter als im Bildbereich 22 sind.

Das gemeinsame Bild 21 enthält ferner einen Übergangsbereich 24, in dem die Verzerrung des zweiten Bildbereichs 23 wenig von der Verzerrung des ersten Bildbereichs 22 abweicht und der gleichzeitig hinsichtlich seiner Erstreckung in Bildbreitenrichtung (Links-Rechts-Richtung in Fig. 5) ausgedünnt und damit verkürzt ist. Dies kann dadurch geschehen, dass in der Weitwinkelrichtung, welche in Fig. 5 zumindest eine Links-Rechts-Richtung ist, jede n-te Pixelreihe des zweiten Bildbereichs 23, das heißt des zweiten Bilds weggelassen wird. Ferner sind, wie es in Fig. 5 erkennbar ist, der erste Bildbereich 22 und der zweite Bildbereich 23 so zusammengesetzt, dass sowohl in Links-Rechts-Richtung als auch in Oben-Unten-Richtung im Wesentlichen die Bilder fluchten.

Dadurch, dass der Übergangsbereich 24 entsprechend modifiziert wird, dass die Verzerrung des zweiten Bildbereichs 23 an die des ersten Bildbereichs 22 angenähert bleibt, ist es möglich, einen gleichmäßigen Übergang zwischen einem wenig verzerrten und einem stark verzerrten Bereich (von links nach rechts in Fig. 4) herzustellen. Dies hat sich als ergonomisch sehr vorteilhaft für die Bedienung des Sichtsystems und die Orientierung für den Fahrer, insbesondere bezüglich möglicher Hindernisse, die im gemeinsamen Bild 21 dargestellt werden, erwiesen, insbesondere, wenn dennoch auf kleinem Raum der gesamte Sichtbereich des Weitwinkelspiegels dargestellt wird und das erste und zweite Bild durchgehend und kontinuierlich ineinander übergehend so zusammengesetzt sind, dass die Bilder in der Weitwinkelrichtung quasi nahtlos bleiben und auch entlang der Richtung senkrecht dazu, die der Fahrzeuglängsachsenrichtung entspricht, fluchten.

Wie es in Fig. 5 ferner erkennbar ist, ist der Nutzfahrzeugseitenbereich 3 in das gemeinsame Bild 21 eingeblendet. Auch dies ermöglicht es, die Orientierung für den Fahrer zu vereinfachen.

### Bezugszeichenliste

- 1: Nutzfahrzeug
- 3: Nutzfahrzeugseitenbereich
- 10: Sichtsystem
- 20: Anzeigeeinheit
- 21: gemeinsames Bild
- 22: erster Bildbereich
- 23: zweiter Bildbereich
- 24: Modifikationsbereich
- 28: Linie
- 29: Linie
- 30: Berechnungseinheit
- 31: Umwandlungseinheit
- 40: Erfassungseinheit
- 41: Aufnahmeeinheit
- 42: Aufnahmeeinheit
- 43: Aufnahmeeinheit
- 44: Sichtkegel
- 45: Sichtkegel
- 51: Sichtfeld
- 52: Sichtfeld
- 61: Sichtfeld
- 62: Sichtfeld

## Patentansprüche

1. Sichtsystem (10) für ein Nutzfahrzeug (1) zur Darstellung von gesetzlich vorgeschriebenen Sichtfeldern (51, 52, 61, 62) eines Hauptspiegels und eines Weitwinkelspiegels der selben Fahrzeugseite in einem Fahrerhaus des Nutzfahrzeugs (1), enthaltend eine Anzeigeeinheit (20) im Fahrerhaus;
eine Erfassungseinheit (40, 41, 42, 43); und
eine Berechnungseinheit (30), die von der Erfassungseinheit (40, 41, 42, 43) erfasste Bilder verarbeitet und zur Anzeige an die Anzeigeeinheit (20) zuführt,
wobei die Erfassungseinheit (40, 41, 42, 43) angepasst ist, mindestens ein erstes Bild, das das Sichtfeld des Hauptspiegels beinhaltet, und ein zweites Bild, das zumindest den Teil des Sichtfelds des Weitwinkelspiegels beinhaltet, der nicht Teil des Sichtfelds des Hauptspiegels ist, zu erfassen, und
wobei die Berechnungseinheit (30) angepasst ist, das erste Bild und das zweite Bild derart zu einem gemeinsamen Bild (21) nahtlos unmittelbar aneinander angrenzend zusammenzusetzen, dass das erste Bild und das zweite Bild eine gemeinsame Perspektive haben, und
wobei die Darstellungen des ersten Bilds und des zweiten Bilds in der Längsrichtung des Nutzfahrzeugs senkrecht zur Weitwinkelrichtung fluchten;
**dadurch gekennzeichnet, dass**
zumindest das zweite Bild in zumindest einer Weitwinkelrichtung, die im Wesentlichen senkrecht zur Bildblickrichtung und horizontal ist, einen Weitwinkelbildwinkel hat, der größer ist als es dem natürlichen Eindruck des menschlichen Auges entspricht, und damit verzerrt ist, und das erste Bild in der Weitwinkelrichtung des zweiten Bilds im Wesentlichen unverzerrt ist, und
wobei zumindest das zweite Bild zumindest in einem Modifikationsbereich (24) in der Weitwinkelrichtung modifiziert ist, dass die Bilderstreckung in der Weitwinkelrichtung verringert ist.

2. Sichtsystem (10) nach Anspruch 1, wobei die Erfassungseinheit (40, 41, 42, 4) eine erste Aufnahmeeinheit (41) für das erste Bild und eine zweite Aufnahmeeinheit (42) für das zweite Bild des Nutzfahrzeugs aufweist.

3. Sichtsystem (10) nach Anspruch 1, wobei die Erfassungseinheit (40, 41, 42, 43) eine gemeinsame Aufnahmeeinheit (43) zum Aufnehmen eines Bilds, das das erste Bild und das zweite Bild beinhaltet, aufweist, und weiter eine Umwandlungseinheit (31) vorgesehen ist, die das erste Bild und das zweite Bild aus dem aufgenommenen Bild extrahiert.

4. Sichtsystem (10) nach Anspruch 3, **dadurch gekennzeichnet, dass** die Umwandlungseinheit (31) in der Berechnungseinheit (30) integriert ist.

5. Sichtsystem (10) nach Anspruch 3 oder 4, **dadurch gekennzeichnet, dass** die Aufnahmeeinheit (43) angepasst ist, ein Weitwinkelbild zu erfassen, bei dem das erste Bild in einem Bildmittenbereich liegt und das zweite Bild angrenzend daran in einem Bildseitenbereich liegt.

6. Sichtsystem (10) nach einem der vorhergehenden Ansprüche, **dadurch gekennzeichnet, dass** das erste Bild und/oder das zweite Bild einen Nutzfahrzeugseitenbereich (3) beinhaltet und die Berechnungseinheit (30) die Bilder derart zusammensetzt, dass der Nutzfahrzeugseitenbereich (3) im gemeinsamen Bild (21) gezeigt wird.

7. Sichtsystem (10) nach einem der vorhergehenden Ansprüche, **dadurch gekennzeichnet, dass** die Berechnungseinheit (30) das zweite Bild durch Weglassen jeder n-ten Pixelreihe in der Weitwinkelrichtung ausdünnt, wobei n ≥ 2, und/oder durch Stehenlassen jeder k-ten Pixelreihe in der Weitwinkelrichtung ausdünnt, wobei k ≥ 2.

8. Sichtsystem (10) nach Anspruch 7, wobei das Weglassen jeder n-ten Pixelreihe oder das Stehenlassen jeder k-ten Pixelreihe in der gesamten Erstreckung des zweiten Bilds gleichmäßig erfolgt.

9. Sichtsystem (10) nach einem der Ansprüche 1 bis 7, wobei die Berechnungseinheit (30) das zweite Bild durch Weglassen von Pixelreihen in der Weitwinkelrichtung ausdünnt, wobei die Anzahl der weggelassenen Pixelreihen mit zunehmender Entfernung vom Fahrzeug zunimmt, vorzugsweise gleichmäßig zunimmt.

10. Sichtsystem (10) nach einem der Ansprüche 7 oder 9, wobei das Ausdünnen nur in dem Modifikationsbereich (24) bezüglich der Weitwinkelrichtung erfolgt.

11. Sichtsystem (10) nach Anspruch 9, wobei das Ausdünnen über die gesamte Erstreckung des zweiten Bilds bezüglich der Weitwinkelrichtung gleichmäßig zunehmend mit zunehmender Entfernung vom Fahrzeug erfolgt.

12. Sichtsystem (10) nach einem der vorhergehenden Ansprüche, **dadurch gekennzeichnet, dass** die Aufnahmeeinheit (40, 41, 42) das erste Bild mit einer ersten Auflösung und das zweite Bild mit einer zweiten Auflösung erzeugt, wobei die Auflösung des ersten Bilds größer als die Auflösung des zweiten Bilds ist.

13. Sichtsystem (10) nach einem der vorhergehenden Ansprüche, **dadurch gekennzeichnet, dass** die Weitwinkelrichtung im Wesentlichen senkrecht zur Nutzfahrzeuglängsachse ist.

14. Sichtsystem (10) nach einem der vorhergehenden Ansprüche, **dadurch gekennzeichnet, dass** die Anzeigeeinheit (20) an der A-Säule des Fahrerhauses angeordnet ist.

15. Sichtsystem (10) nach einem der vorhergehenden Ansprüche, **dadurch gekennzeichnet, dass** die Anzeigeeinheit (20) einen Bildschirm oder eine Projektionseinrichtung auf ein Fahrzeugstrukturbauteil enthält.

16. Sichtsystem (10) nach einem der vorhergehenden Ansprüche, wobei das erste Bild einen virtuellen Sichtkegel mit einem Kegelwinkel von 40-50° hat.

17. Sichtsystem (10) nach einem der vorhergehenden Ansprüche, wobei der Bildwinkel des ersten Bildes 9 bis 20° beträgt, und der Bildwinkel des zweiten Bildes 50 bis 70° beträgt.

## Claims

1. A visual system (10) for a commercial vehicle (1) for displaying legally prescribed fields of vision (51, 52, 61, 62) of a main mirror and a wide-angle mirror provided on the same side of the vehicle within a driver's cabin of the commercial vehicle (1), comprising a display unit (20) within the driver's cabin;
an acquisition unit (40, 41, 42, 43); and
a calculation unit (30) for processing the images acquired by acquisition unit (40, 41, 42, 43) and supplying them to display unit (20) for display,
wherein the acquisition unit (40, 41, 42, 43) is adapted to detect at least a first image comprising the field of vision of the main mirror, and a second image comprising at least the part of the field of vision of the wide-angle mirror that is not part of the field of vision of the main mirror, and
wherein the calculation unit (30) is adapted to compose the first and second image to a combined image, with a seamless transition and immediately adjacent to each other, such that the first and second image have a common perspective, and
wherein the displayed first and second images align perpendicular to the wide-angle-direction in the longitudinal direction of the commercial vehicle;
**characterized in that**
at least the second image has a wide-angle view that is greater than the natural angle of view of a human eye, and thus distorted, in at least a wide-angle direction that is substantially perpendicular to the image perspective and runs horizontally, and the first image is substantially undistorted in the wide-angle direction of the second image, and
wherein at least the second image is modified at least in a modification portion (24) in the wide-angle direction, such that the extension of the image is reduced in the wide-angle direction.

2. The visual system (10) according to claim 1, wherein the acquisition unit (40, 41, 42, 43) is provided with a first capturing unit (41) for the first image and a second capturing unit (42) for the second image of the commercial vehicle.

3. The visual system (10) according to claim 1, wherein the acquisition unit (40, 41, 42, 43) comprises a common or combined capturing unit (43) for capturing an image including the first and second image, and wherein a transformation unit (31) is provided for extracting the first and second image from the captured image.

4. The visual system (10) according to claim 3, **characterized in that** the transformation unit (31) is integrated in the calculation unit (30).

5. The visual system (10) according to claim 3 or 4, **characterized in that** the capturing unit (43) is adapted to acquire a wide-angle image, wherein the first image is positioned in a centre portion of the image and the second image is positioned on a side portion thereof and adjacent to the first image.

6. The visual system (10) according to one of the preceding claims, **characterized in that** the first and/or the second image comprises a side portion (3) of the commercial vehicle and the calculation unit (30) combines the images such that the side portion (3) of the commercial vehicle is shown in the combined image.

7. The visual system (10) according to one of the preceding claims, **characterized in that** the calculation unit (30) thins out the second image by eliminating every n-th pixel row in the wide-angle direction, wherein n ≥ 2, and/or by leaving every k-th pixel row in the wide-angle direction, wherein k ≥ 2.

8. The visual system (10) according to claim 7, wherein eliminating every n-th pixel row or leaving every k-th pixel row is evenly carried out over the entire extension of the second image.

9. The visual system (10) according to one of claims 1 to 7, wherein the calculation unit (30) thins out the second image by eliminating pixel rows in the wide-angle direction, wherein the number of eliminated pixel rows increases, preferably evenly, with increasing distance from the vehicle.

10. The visual system (10) according to one of claims 7 or 9, wherein thinning is only carried out in the modification region (24) with regard to the wide-angle direction.

11. The visual system (10) according to claim 9, wherein thinning is carried out evenly increasing with increasing distance from the vehicle over the entire extension of the second image in the wide-angle direction.

12. The visual system (10) according to one of the preceding claims, **characterized in that** the capturing unit (40, 41, 42) generates the first image with a first resolution and the second image with a second resolution, wherein the resolution of the first image is higher than the resolution of the second image.

13. The visual system (10) according to one of the preceding claims, **characterized in that** the wide-angle direction is substantially perpendicular to the longitudinal axis of the commercial vehicle.

14. The visual system (10) according to one of the preceding claims, **characterized in that** the display unit (20) is arranged on the A-pillar of the driver's cabin.

15. The visual system (10) according to one of the preceding claims, **characterized in that** the display unit (20) comprises a monitor or a projection device on a structural component of the vehicle.

16. The visual system (10) according to one of the preceding claims, wherein the first image has a virtual cone of view with a cone-angle of 40-50°.

17. The visual system (10) according to one of the preceding claims, wherein the visual angle of the first image is 9 to 20°, and the visual angle of the second image is 50 to 70°.

## Revendications

1. Système de vision (10) pour un véhicule utilitaire (1) destiné à représenter des champs de vision (51, 52, 61, 62) prescrits par la loi d'un rétroviseur principal et d'un rétroviseur grand angle du même côté du véhicule dans une cabine de conducteur du véhicule utilitaire (1), contenant une unité d'affichage (20) dans la cabine de conducteur,
une unité de saisie (40, 41, 42, 43), et
une unité de calcul (30) qui traite des images saisie par l'unité de saisie (40, 41, 42, 43) et les fournit à l'unité d'affichage (20) pour être affichées,
dans lequel l'unité de saisie (40, 41, 42, 43) est adaptée à saisir au moins une première image que contient le champ de vision du rétroviseur principal et une deuxième image que contient au moins la partie du champ de vision du rétroviseur grand angle qui ne fait pas partie du champ de vision du rétroviseur principal, et
dans lequel l'unité de calcul (30) est adaptée pour réunir sans transition de manière directement adjacente l'une à l'autre la première image (21) et la deuxième image de façon que la première image et la deuxième image aient une perspective commune, et
dans lequel les représentations de la première image et de la deuxième image dans la direction longitudinale du véhicule utilitaire s'alignent perpendiculairement à la direction grand angle ;
**caractérisé en ce qu'**au moins la deuxième image au moins dans la direction grand angle, qui est pratiquement perpendiculairement à la direction d'observation de l'image et horizontale, a un angle d'image grand angle qui est plus grand que celui correspondant à la perception naturelle de l'oeil humain, et est donc déformée, et la première image dans la direction grand angle de la deuxième image est pratiquement non déformée, et **en ce qu'**au moins la deuxième image est modifiée dans une région de modification (24) dans la direction grand angle de sorte que l'étendue de l'image dans la direction grand angle est réduite.

2. Système de vision (10) selon la revendication 1, dans lequel l'unité de saisie (40, 41, 42, 43) présente une première unité d'enregistrement (41) pour la première image et une deuxième unité d'enregistrement (42) pour la deuxième image du véhicule utilitaire.

3. Système de vision (10) selon la revendication 1, dans lequel l'unité de saisie (40, 41, 42, 43) présente une unité d'enregistrement (43) commune pour enregistrer une image qui contient la première image et la deuxième image, et une unité de conversion (31) qui extrait la première image et la deuxième image de l'image enregistrée est en outre prévue.

4. Système de vision (10) selon la revendication 3, **caractérisé en ce que** l'unité de conversion (31) est intégrée dans l'unité de calcul (30).

5. Système de vision (10) selon la revendication 3 ou 4, **caractérisé en ce que** l'unité d'enregistrement (43) est adaptée pour saisir une image grand angle dans laquelle la première image est située dans une zone centrale d'image et la deuxième image est située adjacente à celle-ci dans une zone latérale d'image.

6. Système de vision (10) selon l'une quelconque des revendications précédentes, **caractérisé en ce que** la première image et/ou la deuxième image contient une zone latérale (3) du véhicule utilitaire et l'unité de calcule (30) réunit les images de telle manière que la zone latérale (3) du véhicule utilitaire soit montrée dans l'image (21) commune.

7. Système de vision (10) selon l'une quelconque des revendications précédentes, **caractérisé en ce que** l'unité de calcul (30) amincit la deuxième image en supprimant chaque n-ième rangée de pixels dans la direction grand angle, n ≥ 2, et/ou en maintenant chaque k-ième rangée de pixels dans la direction grand angle, k ≥ 2.

8. Système de vision (10) selon la revendication 7, dans lequel la suppression de chaque n-ième rangée de pixels ou le maintien de chaque k-ième rangée de pixels dans l'étendue totale de la deuxième image a lieu de manière uniforme.

9. Système de vision (10) selon l'une quelconque des revendications 1 à 7, dans lequel l'unité de calcul (30) amincit la deuxième image en supprimant des rangées de pixels dans la direction grand angle, le nombre des rangées de pixels supprimées augmentant à mesure qu'augmente l'éloignement par rapport au véhicule, augmentant de préférence de manière uniforme.

10. Système de vision (10) selon l'une quelconque des revendications 7 ou 9, dans lequel l'amincissement n'a lieu que dans la région de modification (24) par rapport à la direction grand angle.

11. Système de vision (10) selon la revendication 9, dans lequel l'amincissement a lieu sur toute l'étendue de la deuxième image par rapport à la direction grand angle en augmentant uniformément à mesure qu'augmente l'éloignement par rapport au véhicule.

12. Système de vision (10) selon l'une quelconque des revendications précédentes, **caractérisé en ce que** l'unité d'enregistrement (40, 41, 42) génère la première image avec une première résolution et la deuxième image avec une deuxième résolution, la résolution de la première image étant plus grande que la résolution de la deuxième image.

13. Système de vision (10) selon l'une quelconque des revendications précédentes, **caractérisé en ce que** la direction grand angle est pratiquement perpendiculaire à l'axe longitudinal du véhicule utilitaire.

14. Système de vision (10) selon l'une quelconque des revendications précédentes, **caractérisé en ce que** l'unité d'affichage (20) est disposée sur le pied avant de la cabine de conducteur.

15. Système de vision (10) selon l'une quelconque des revendications précédentes, **caractérisé en ce que** l'unité d'affichage (20) contient un écran ou un dispositif de projection sur un élément de la structure du véhicule.

16. Système de vision (10) selon l'une quelconque des revendications précédentes, dans lequel la première image a un cône de vision virtuel ayant un angle de cône de 40-50°.

17. Système de vision (10) selon l'une quelconque des revendications précédentes, dans lequel l'angle de vision de la première image est de 9 à 20° et l'angle de vision de la deuxième image est de 50 à 70°.
